# EUROPÄISCHE PATENTSCHRIFT

(11) **EP 0 659 609 B1**
(45) Veröffentlichungstag und Bekanntmachung des Hinweises auf die Patenterteilung: **20.01.1999**
(21) Anmeldenummer: 94117242.1
(22) Anmeldetag: 02.11.1994
(51) Int. Cl.: B60R 1/06

(54) **Rückblickspiegel, insbesondere für Lkw**
Rear view mirror, particularly for trucks
Rétroviseur, en particulier pour véhicules utilitaires

(30) Priorität: 21.12.1993 DE 4343691
(43) Veröffentlichungstag der Anmeldung: 28.06.1995
(73) Patentinhaber: MEKRA Lang GmbH & Co. KG, D-90765 Fürth (DE)
(72) Erfinder: Lang, Heinrich, D-91465 Ergersheim (DE); Seiboth, Wolfgang, D-91438 Bad Windsheim (DE)
(74) Vertreter: Rau, Manfred, Dr. Dipl.-Ing.

(56) Entgegenhaltungen:
- WO-A-92/03309
- DE-A- 2 729 725
- DE-A- 3 049 169
- DE-A- 3 614 927
- DE-A- 4 240 773
- GB-A- 1 517 601
- US-A- 4 258 894

## Beschreibung

Die Erfindung betrifft einen Außen-Rückblickspiegel nach dem Oberbegriff des Anspruches 1.

Derartige Außen-Rückblickspiegel sind beispielsweise aus der B1 DE-A-2 729 725 bekannt.

Der Erfindung liegt die Aufgabe zugrunde, einen Außen-Rückblickspiegel der gattungsgemäßen Art so auszugestalten, daß das Sichtfeld des Fahrers möglichst wenig eingeschränkt wird.

Diese Aufgabe wird erfindungsgemäß bei einem Außen-Rückblickspiegel der gattungsgemäßen Art durch die Merkmale im Kennzeichnungsteil des Anspruches 1 gelöst. Durch die erfindungsgemäßen Maßnahmen wird erreicht, daß im Randbereich der durch den Fahrer nutzbaren Spiegelfläche sich kein das Sichtfeld, also das Sehen am Spiegel vorbei, behindernder Randbereich befindet. Zwischen dem vom Fahrer aufgenommenen Spiegelbild und dem Sichtfeld seitlich nach vorn ist praktisch keine Trennung, also praktisch kein Totraum mehr. Diese Maßnahme dient auch einer zuverlässigen Befestigung und einem Schutz der Spiegelscheibe auf der Trägerplatte, ohne daß - insbesondere bei der Weiterbildung nach Anspruch 2 - dieser Randsteg zu einer nennenswerten Sichtbehinderung führt. Er dient primär dazu, die Seitenränder der Spiegelscheibe abzudecken und zu schützen. Die Maßnahme nach Anspruch 3 dient ebenfalls dem erfindungsgemäßen Zweck.

Durch die Weiterbildung nach Anspruch 4 wird erreicht, daß die Grundforderung, die Spiegelscheibe auswechselbar zu gestalten, auch mit der erfindungsgemäßen Lösung erreichbar ist. Die Ansprüche 5 und 6 geben Einzelheiten hierzu an. Die erfindungsgemäße Ausgestaltung führt in der Weiterbildung nach Anspruch 7 dazu, daß die Verschmutzung der Scheibe noch weiter reduziert wird.

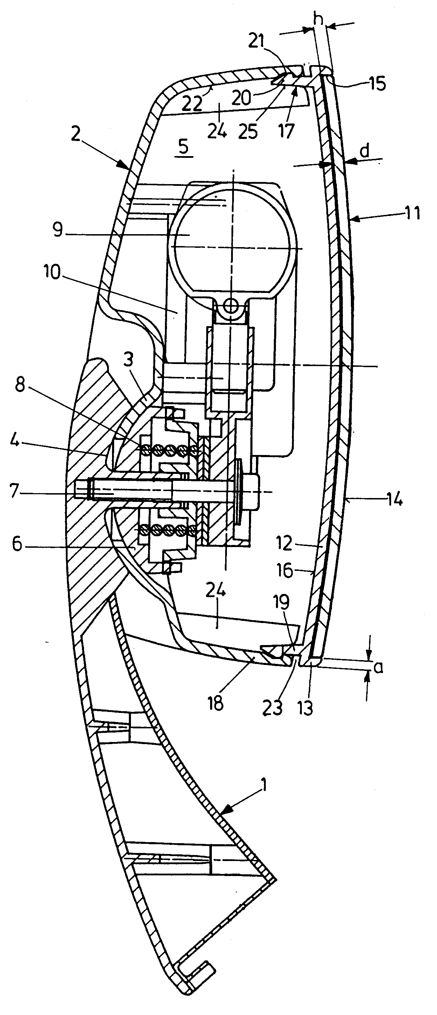

Bei dem in der Zeichnung dargestellten Außen-Rückblickspiegel handelt es sich um einen Außenspiegel insbesondere für Lkw. Er weist ein am Fahrerhaus eines Lkw befestigbaren Haltearm 1 auf, an dem ein Gehäuse 2 schwenkbar gelagert ist. Das Gehäuse 2 ist mit einer kugelkalottenförmig ausgebildeten Lagerschale 3 in einer entsprechenden Lagerausnehmung 4 des Haltearms 1 gelagert und wird mittels eines im Innenraum 5 des Gehäuses 2 befindlichen Lagerkörper 6 in die Lagerausnehmung 4 gedrückt. Das Gesamtpaket ist mittels eines Gewindebolzens 7 zusammengehalten, gegen den sich mittelbar eine Druckfeder 8 abstützt, die sich andererseits gegen den Lagerkörper 6 abstützt, so daß der Lagerkörper 6 mit einem ausreichenden Druck gegen die Lagerschale 3 und diese wiederum gegen die Lagerausnehmung 4 gedrückt wird. Zur Schwenkverstellung des Gehäuses 2 gegenüber dem Haltearm 1 sind zwei Stellmotoren 9, 10 vorgesehen, die einerseits im Gehäuse 2 fest angeordnet sind und andererseits mit dem Gewindebolzen 7 verbunden sind, der fest in den Haltearm 1 geschraubt ist. Diese Ausgestaltung ist grundsätzlich bekannt und für die Erfindung nicht wesentlich.

Das Gehäuse 2 ist mit einer Spiegelscheibe 11 versehen, die auf eine Trägerplatte 12 aufgeklebt ist. Diese Trägerplatte 12 weist einen umlaufenden Randsteg 13 auf, der eine Höhe h aufweist, die maximal der Dicke d der Spiegelscheibe 11 entspricht. Im Außenbereich ist der Randsteg 13 zur Spiegelscheibe 11 hin verjüngt bzw. eingeschnürt, so daß in der Ebene der Oberfläche 14 der Spiegelscheibe 11 der Randsteg 13 eine vernachlässigbare Dicke hat. Die Grund-Dicke a des Randsteges 13 beträgt im übrigen ohnehin nur 2 bis 3 mm, da er nur dazu dient, den Seitenrand 15 der Spiegelscheibe 11 zu schützen. Die nicht gesondert dargestellte Spiegelbeschichtung der Spiegelscheibe 11 befindet sich - wie üblich - auf der der Trägerplatte 12 zugewandten Seite der Spiegelscheibe 11.

Die Trägerplatte 12 ist auf ihrer der Spiegelscheibe 11 abgewandten Rückseite 16 mit einem umlaufenden Verriegelungssteg 17 versehen. Dieser besteht im wesentlichen aus einem in den zugeordneten offenen Wandbereich 18 des Gehäuses 2 hineinragenden Wandabschnitt 19, der dicht an der Innenseite des Wandbereiches 18 anliegt. Zu seinem freien Ende hin ist der Wandabschnitt 19 mit einem widerhakenartigen Vorsprung 20 versehen, der ebenfalls umläuft. Der Vorsprung 20 verjüngt sich zum freien Ende des Wandabschnittes 19 hin nach innen, so daß er im Querschnitt die Form einer längsgeteilten Pfeilspitze aufweist. Dem Vorsprung 20 ist eine umlaufende nutartige Ausnehmung 21 in der Innenwand 22 des Gehäuses 2 zugeordnet, in die der Vorsprung 20 nach dem Einschieben des Verriegelungssteges 17 in den Wandbereich 18 des Gehäuses 2 elastisch einrastet. Zwischen der Rückseite 16 der Trägerplatte 12 und dem Wandbereich 18 des Gehäuses 2 verbleibt eine nach außen offene nutartige Ausnehmung 23, die bewirkt, daß beim Fahren eines Fahrzeuges der Luftstrom abreißt, so daß eine geringere Verschmutzung der Oberfläche 14 der Spiegelscheibe 11 eintritt.

Wie aus der Zeichnung erkennnbar ist, steht die Trägerplatte 12 mit ihrem Randsteg 13 nirgends über den Wandbereich 18 nach außen vor, so daß durch das Gehäuse 2 keine zusätzliche Sichtbehinderung auftritt.

An der Innenwand 22 des Gehäuses 2 sind sich bis zum Rand des Gehäuses erstreckende Rippen 24 angeordnet, die einen dem Verriegelungssteg 17 angepaßten Ausschnitt 25 aufweisen, so daß - wie aus der Zeichnung ersichtlich ist - die Verriegelungsstege 17 zum Innenraum 5 des Gehäuses 2 hin abgestützt werden, also mit dem Vorsprung 20 in der Ausnehmung 21 gehalten werden.

## Patentansprüche

1. Außen-Rückblickspiegel, insbesondere für Lkw, mit einem Haltearm (1), mit einem am Haltearm (1) - gegebenenfalls motorisch - verstellbaren Gehäuse (2) und mit einer gegenüber dem Gehäuse (2) unverstellbar, aber auswechselbar an letzterem angebrachten Spiegelscheibe (11), die auf einer Trägerplatte (12) befestigt ist und über ihre gesamte Oberfläche (14) frei liegt, wobei die Trägerplatte (12) lösbar am Gehäuse (2) angebracht ist, dadurch gekennzeichnet, daß die Trägerplatte (12) mit einem den Seitenrand (15) der Spiegelscheibe (11) umfassenden, nicht über die Oberfläche (14) der Spiegelscheibe (11) vorstehenden Randsteg (13) versehen ist.

2. Außen-Rückblickspiegel nach Anspruch 1 dadurch gekennzeichnet, daß der Randsteg (13) in Richtung zur Oberfläche (14) der Spiegelscheibe (11) sich zu letzterer hin verjüngt.

3. Außen-Rückblickspiegel nach Anspruch 1 oder 2, dadurch gekennzeichnet, daß der der Trägerplatte (12) benachbarte Wandbereich (18) des Gehäuses (2) nicht über den Außenumfang der Trägerplatte (12) vorsteht.

4. Außen-Rückblickspiegel nach einem der Ansprüche 1 bis 3, dadurch gekennzeichnet, daß die die Spiegelscheibe (11) tragende Trägerplatte (12) in das Gehäuse (2) eingerastet ist.

5. Außen-Rückblickspiegel nach einem der Ansprüche 1 bis 7, dadurch gekennzeichnet, daß die Trägerplatte (12) auf ihrer der Spiegelscheibe (11) abgewandten Rückseite (16) mit einem Verriegelungssteg (17) versehen ist, der in eine angepaßte Ausnehmung (21) im Gehäuse (2) eingreift.

6. Außen-Rückblickspiegel nach Anspruch 5, dadurch gekennzeichnet, daß der Verriegelungssteg (17) mit mindestens einem in die Ausnehmung (21) eingreifenden Vorsprung (20) versehen ist.

7. Außen-Rückblickspiegel nach einem der Ansprüche 1 bis 6, dadurch gekennzeichnet, daß zwischen der Trägerplatte (12) und dem benachbarten Wandbereich (18) des Gehäuses (2) eine umlaufende nutartige, nach außen offene Ausnehmung (23) ausgebildet ist.

## Claims

1. An exterior rear view mirror, in particular for trucks, comprising a holder (1), an adjustable, possibly motor-adjustable housing (2) on the holder (1) and a mirror glass (11) disposed on the housing (2) in a manner fixed relative to the latter but interchangeable, which mirror glass (11) is fixed on a support plate (12) and the entire surface (14) of which lies flee, the support plate (12) being detachably disposed on the housing (2), characterized in that the support plate (12) is provided with a rim (13) encircling the edge (15) of the mirror glass (11) and not projecting over the surface (14) of the mirror glass (11).

2. An exterior rear view mirror according to claim 1, characterized in that the rim (13) tapers toward the mirror glass (11) in the direction toward the surface (14) of the mirror glass (11).

3. An exterior rear view mirror according to one of claims 1 or 2, characterized in that the wall portion (18) adjacent to the support plate (12), of the housing (2) does not project from the circumference of the support plate (12).

4. An exterior rear view mirror according to one of claims 1 to 3, characterized in that the support plate (12) supporting the mirror glass (11) is locked into place in the housing (2).

5. An exterior rear view mirror according to one of claims 1 to 4, characterized in that on its rear (16) turned away from the mirror glass (11), the support plate (12) is provided with a locking web (17) which engages with a suited recess (21) in the housing (2).

6. An exterior rear view mirror according to claim 5, characterized in that the locking web (17) is provided with at least one projection (20) engaging with the recess (21).

7. An exterior rear view mirror according to one of claims 1 to 6, characterized in that an encircling, groove-like and externally open recess (23) is formed between the support plate (12) and the adjacent wall portion (18) of the housing (2).

## Revendications

1. Rétroviseur extérieur, notamment pour poids lourds, comportant un bras de support (1), un boîtier (2) orientable - le cas échéant de manière motorisée - sur le bras de support (1) et un miroir (11), non orientable par rapport au boîtier (2) mais appliqué sur ce dernier de manière à pouvoir être remplacé, qui est fixé sur une plaque de support (12) et dont la totalité de la surface (14) est dégagée, la plaque de support (12) étant fixée de manière amovible sur le boîtier (2), caractérisé en ce que la plaque de support (12) possède un rebord (13) entourant le bord latéral (15) du miroir (11) et ne dépassant pas de la surface (14) du miroir (11).

2. Rétroviseur extérieur selon la revendication 1, caractérisé en ce que, dans la direction de la surface (14) du miroir (11), le rebord (13) s'amincit vers ce dernier.

3. Rétroviseur extérieur selon la revendication 1 ou 2, caractérisé en ce que la partie de paroi (18) du boîtier (2) voisine de la plaque de support (12) ne dépasse pas du périmètre extérieur de la plaque de support (12).

4. Rétroviseur extérieur selon l'une des revendications 1 à 3, caractérisé en ce que la plaque de support (12) supportant le miroir (11) est encliquetée dans le boîtier (2).

5. Rétroviseur extérieur selon l'une des revendications 1 à 4, caractérisé en ce que la plaque de support (12) est pourvue, sur sa face arrière (16) opposée au miroir (11), d'une collerette de verrouillage (17) qui s'engage dans un évidement adapté (21) du boîtier (2).

6. Rétroviseur extérieur selon la revendication 5, caractérisé en ce que la collerette de verrouillage (17) est pourvue d'au moins une partie en saillie (20) qui vient en contact dans l'évidement (21).

7. Rétroviseur extérieur selon l'une des revendications 1 à 6, caractérisé en ce qu'un évidement circonférentiel (23) en forme de rainure et ouvert vers l'extérieur est formé entre la plaque de support (12) et la partie de paroi (18) du boitier (2) voisine.
